# EUROPEAN PATENT SPECIFICATION

(11) **EP 2 970 754 B1**
(45) Date of publication and mention of the grant of the patent: **30.09.2020**
(21) Application number: 14778679.2
(22) Date of filing: 17.03.2014
(51) Int. Cl.: C09K 8/68

(54) **DEGRADABLE POLYMERS AND METHOD FOR FRACKING APPLICATIONS**
ABBAUBARE POLYMERE UND VERFAHREN FÜR FRACKING-ANWENDUNGEN
POLYMÈRES DÉGRADABLES ET PROCÉDÉS POUR DES APPLICATIONS DE FRACTURATION HYDRAULIQUE

(30) Priority: 15.03.2013 US 201313840818
(43) Date of publication of application: 20.01.2016
(73) Proprietor: Danimer Scientific LLC, Bainbridge, GA 39817 (US)
(72) Inventor: WANN, Steven, R., Bainbridge, GA 39819 (US); CARRAWAY, Daniel, T., Bainbridge, GA 39817 (US)
(74) Representative: Boult Wade Tennant LLP
(86) International application number: PCT/US2014/030463
(87) International publication number: WO 2014/165315

(56) References cited:
- WO-A1-00/43435
- WO-A1-2005/000993
- WO-A1-2011/096968
- WO-A2-97/40085
- WO-A2-03/027431
- US-A- 5 233 015
- US-A1- 2011 196 125

## Description

### CROSS-REFERENCE TO RELATED APPLICATIONS

### FIELD

This application relates to degradable polymers and associated compositions of matter for use in connection with fracking well systems and methods.

### BACKGROUND

"Completion" is an important prerequisite to effective use of a subsurface well system for extraction of water, petroleum, or other hydrocarbon material from a subsurface formation. Well completion varies considerably depending on the extraction approach to be used for recovery or other activity with respect to the subsurface material.

A considerable number of new wells have been or are being completed with a view toward recovery of oil and/or gas caches in relatively low permeability subsurface rock or other formation using hydraulic fracturing, acid etching, and other such techniques, generally known as fracking, wherein subterranean formations adjacent well boreholes are subjected to extremely high applied pressures in order to modify the permeability of the formation to attain economically viable recovery rates of the material from caches of the same in the formation. Well completion in such cases may also include installation of perforated piping and/or sand screens and the like disposed within the well structure adjacent subsurface areas to be fracked. Special valves and other downhole tools and equipment may also be deployed in boreholes adjacent extraction zones containing caches targeted for recovery via fracking systems.

Conventional fracking techniques suffer from many purported drawbacks and problems including, for example, and not by way of limitation, material and other deficiencies in existing hydraulic-based recovery well systems, rheology and other limitations in fracturing fluids and additives that may contain proppant materials, such as excessive plugging of well structures including flow apertures in downhole screens and the like, and overall inadequacies in known methodologies including environmental concerns, especially in regard to smaller and other recovery systems designed to work subterranean formations relatively close to the surface. The present invention has, as a primary aim, to beneficially address these and other drawbacks and problems associated with known fracking techniques and with methods, materials, structures and devices used in subsurface fluid recovery, treatment, and other operations designed to employ fracking and similar hydraulic pressure techniques, and to help overcome or limit formation permeability and other limitations that currently hinder or prevent economical facile recovery of potentially valuable caches disposed in low permeability subsurface areas.

WO2011/096968 relates to degradable polymers. The polymers are solid when maintained under substantially dry conditions at a temperature of up to about 90 degrees C. When contacted with water at a temperature of up to about 90 degrees C, however, the polymers initially remain solid for a period of up to about 6 to about 24 hours, then depolymerize to provide a liquid having a viscosity of from about 1 to about 200,000 centipoise after a period of time from about 8 hours to about 3 days and then further depolymerizes to water-soluble components after a period of time at least about 3 days. Also disclosed are sand screen coatings made with the polymers and hydraulic and acid fracturing methods using the polymers.

### SUMMARY

### Degradable Polymer Composition

The present invention provides a composition as in claim 1 and a method as in claim 15. In one aspect, the present disclosure provides a composition, which includes at least one degradable polymer. According to one embodiment, the degradable polymer is substantially solid when maintained under substantially dry conditions at a temperature of up to about 90 °C. When the degradable polymer is contacted with water having a temperature of up to about 90 °C, the degradable polymer initially remains substantially solid for from about 6 to about 24 hours; however, the polymer chains are slowly "degrading" due primarily to hydrolytic action, referred to at times herein as "depolymerization," which eventually manifests qualitatively as an observable transition of the polymeric material from an essentially solid form to a less and less "solid" state, then ultimately to dissolved or dispersed state as hydrolysis breaks the material down into oligomeric and ultimately monomeric constituents. During this time, the viscosity of the material may range from about 1 to about 200,000 mPa·s (centipoise (cP)); however, a transition occurs during an initial stage due to hydrolysis wherein the material transforms from an essentially solid form, to a highly viscous, but substantially "pumpable" form, over a period of from about 8 hours to about 3 days, and then further depolymerizes, again, primarily by reason of hydrolytic activity, in a second stage from the highly viscous, but pumpable state, to the final breakdown to substantially water-soluble and/or water-dispersible components (generally, small oligomers and monomer residues) after at least about 3 days. In preferred embodiments, the polymer composition is initially supplied at the surface in particulate form, such as small pellets, for easier mixing with water to make a slurry. The polymer is preferably deployed to the downhole location in the aqueous slurry, and allowed to sit there for a dwell time and "see" the downhole temperature (which, in the context of the present disclosure, may range from about 44°C to about 82°C) adjacent the desired downhole location. During this dwell time, it is preferred to permit the particulates to coalesce into a mass, which mass gradually transitions during a fist stage from a substantially solid monolithic columnar state to a state somewhat like a weak gel, pudding, or similar consistency, that being a highly viscous liquid which, under the pressures employed in fracking, can be "squeezed" or, in essence, pumped, through an adjacent well screen, or perforated tube, and then urged against the adjacent sidewall of the borehole, where it begins to enter any available cracks or fissures.

As the viscous polymer begins to fill all available spaces under the pump pressure, the hydraulic fracturing phase begins to commence, where pressure transmitted through the polymer material (and associated aqueous medium) begins to create, expand, and propagate more and more cracks and other openings in the formation. The pressure is allowed to build to the fracturing pressure, and then held for a time of at least about 3 days, during which the polymer, at the downhole/formation temperature, further depolymerizes through the second stage until its viscosity drops to a very low level near that of plain water.

According to certain aspects of the disclosure, the at least one degradable polymer is a copolymer that preferably includes: (1) from about 20 to about 80 mole percent monomer residues of a first monomer selected from the group consisting of L- lactic acid, D-lactic acid, L-lactide, D-lactide, and glycolic acid; (2) from about 20 to about 80 mole percent monomer residues of a second monomer, which is different from the first monomer, selected from the group consisting of L-lactic acid, D-lactic acid, L-lactide, D-lactide, and glycolic acid; and (3) from about 0.001 to about 32 mole percent monomer residues of at least one compound capable of reacting with the first or second monomer to form an ester.

In certain aspects of the disclosure, the at least one compound capable of reacting with the first or second monomer to form an ester is preferably selected from the group consisting of (i) a monofunctional or multifunctional alcohol; (ii) a monofunctional or multifunctional carboxylic acid; (iii) an anhydride that yields a monofunctional or multifunctional carboxylic acid upon reaction of the anhydride; and (iv) a monofunctional or multifunctional epoxide.

In accordance with one preferred aspect of the disclosure the first monomer includes L-lactic acid and the second monomer includes glycolic acid. The degradable copolymer preferably includes in the range of from about 70 to about 80 mole percent monomer residues of the first monomer and from about 20 to about 30 mole percent monomer residues of the second monomer.

Another preferred aspect of the disclosure includes, in the degradable copolymer, L-lactic acid as the first monomer and D-lactic acid as the second monomer. The degradable copolymer in these aspects also preferably includes from about 70 to about 80 mole percent monomer residues of the first monomer and from about 20 to about 30 mole percent monomer residues of the second monomer.

In still other aspect of the disclosure, the first monomer preferably includes L-lactide and the second monomer includes D-lactide. The degradable copolymer preferably includes from about 50 to about 99.5 mole percent monomer residues of the first monomer and from about 0.5 to about 50 mole percent monomer residues of the second monomer.

In some aspects the composition may include a blend of two or more embodiments of the aforementioned degradable polymer. The composition may also include up to about 5 weight percent of polylactic acid having a number average molecular weight of at least about 25,000.

In other aspects of the disclosure the at least one compound capable of reacting with the first or second monomer to form an ester preferably includes a compound selected from the group consisting of (i) a monofunctional or multifunctional alcohol having from 1 to 16 hydroxyl groups; (ii) a monofunctional or multifunctional carboxylic acid having from 1 to 16 carboxylic acid groups; (iii) and an anhydride that yields a monofunctional or multifunctional carboxylic acid having from 2 to 16 carboxylic acid groups upon reaction of the anhydride.

The at least one compound capable of reacting with the first or second monomer to form an ester may, in some embodiments, include a multifunctional alcohol selected from the group consisting of pentaerythritol, glycerine, 1,3-propanediol, 1 ,4-butanediol, 1,6-hexanediol, trimethyolpropane, dendritic polyols having up to 16 hydroxyl groups, dipentaerythritol, and mixtures thereof.

In one aspect of the disclosure the at least one compound capable of reacting with the first or second monomer to form an ester preferably includes a polymer, such as a polyvinyl alcohol or a polyacrylic acid.

In another aspects of the disclosure the at least one compound capable of reacting with the first or second monomer to form an ester preferably includes pentaerythritol.

In another aspects the at least one compound capable of reacting with the first or second monomer to form an ester preferably includes a multifunctional carboxylic acid selected from the group consisting of adipic acid, succinic acid, sebacic acid, and mixtures thereof.

In yet another aspect the at least one compound capable of reacting with the first or second monomer to form an ester preferably includes a cyclic anhydride that yields a multifunctional carboxylic acid selected from the group consisting of trimellitic anhydride, pyromellitic anhydride, and mixtures thereof.

The degradable copolymer preferably has a number average molecular weight of from about 3000 to about 22,000. In certain aspects, it is also preferred that the degradable copolymer exhibit a polydispersity index of from about 1.0 up to about 3.0.

The disclosure further includes, in certain preferred aspects, one or more aspects of the afore described degradable polymer composition in solid particulate form for being mixed with a fluid, preferably water, to provide a slurry that is flowable, as by being pumped, downhole into a well structure formed in a rock or other subsurface formation to be fracked to a downhole location in the well structure containing water at a downhole temperature associated with the temperature of material in the adjacent formation. The well structure includes, in at least the aforesaid location, provision for establishing flow communication between the adjacent formation and the interior of the well structure adjacent a zone of the formation to be fracked.

Particles of the degradable polymer composition may, in certain embodiments, further comprise a barrier coating material that limits undesired adhesion, sticking, and/or agglomeration of particles in the slurry, which coating preferably comprises a material that exhibits a melting temperature at about the downhole temperature so as to cause the coating to melt and flow away from the surface of particles of the degradable polymer composition generally upon delivery of the slurry to the downhole location, thereby exposing underlying surfaces of the particles comprising degradable polymer and enabling agglomeration of particles in the downhole location so as to form the above-described columnar monolith, which is a pumpable mass of the polymer composition comprising agglomerated polymer, degrading to a reduced viscosity form in the well structure interior.

In a preferred aspect the coating comprises a crystalline wax-like material having a relatively low melt viscosity to enable the same to be applied to uncoated particles of the degradable polymer by, for example, spray coating the material in melted form into the particles, preferably with the particles in a fluidized state in heated air or other suitable gas, to provide a relatively thin coating of the material on particles of degradable polymer. In a preferred embodiment the barrier coating comprises about 2% of the total weight of the particles in coated form.

The wax-like material is preferably also hydrolysable by the water phase at the conditions of the downhole location to provide environmentally benign, biodegradable breakdown products dispersible into the formation with the aqueous medium along with the degrading polymer composition, but generally in a separate phase due, at least in part, to a preferred specific gravity at least about 8-10% different from that of the uncoated polymer composition.

A preferred coating material is poly (hexamethylene adipate) (PHA), a crystalline polyester wax-like material having properties in accord with the disclosure objectives relative to the coating as outlined herein. A range of PHA and other similar polyester wax-like materials are available (and/or can be produced) in crystalline forms in a variety of relatively low, relatively sharp melting points needed for use in the present disclosure. Melting points of the coating material in the range of from about 44°C to about 82°C are preferred, substantially matched to downhole or "service" temperatures ranging from about 43.3 °C (110°F) to about 82.2 °C (180)°F.

However, given the objective that the coating melt away from the particles upon and after deployment of the particle slurry to the general area of the downhole location from which the mass of degradable/degrading polymer is to be urged out into the formation under the insistence of applied fracture pressure, and the potential fluctuation of the downhole location temperature up or down by a few degrees, it is preferred to "match" the coating melt temperature to the "low side" of the expected downhole temperature. As an added measure to insure melting away of the coating, it is preferred to provide for local heating of the wellbore and associated materials contained within the downhole location, by at least a few degrees, sufficient to cause the temperature of the coating to elevate to at least about its melting point in order to induce melting away of the same and to enable commencement of full agglomeration of the degradable particles into a substantial monolithic mass, as explained herein, without undue delay. Again, once the agglomerate of polymer composition has been allowed to "see" the downhole temperature for a sufficient time, applied pressure is commenced and the fracture pressure is hydraulically exerted on the formation through the polymer composition and associated water phase to begin to induce tracking of the adjacent formation and associated "squeezing" of "degrading" polymer composition, together with any proppant dispersed therein, into existing, new, and/or propagating cracks, fissures, splits, veins, and other polymer flow conduits/channels as the polymer composition continues to hydrolytically degrade.

As the polymer composition spreads into the formation, the action of hydrolysis on the polymer will lead to decreasing viscosity over a relatively short time (typically only a day or two as a feature of the disclosure) until the same reaches a "break" point, at which its flow dynamics/rheology will be similar to that of water, such that its breakdown products will relatively quickly disperse in, and be distributed through, the formation by and with local water movement. Polymer degradation products, initially believed to be pieces or fragments of the original higher weight ester polymer molecules, gradually transition to monomer residues, all of which are subject to hydrolytic attack and other interactions with aqueous media and various other substances, such as ions in the water, where they are free to associate and form soluble salts and other forms. Polymer fragments will continue to be hydrolyzed and substantially biodegrade into environmentally benign monomer and other substances, leaving behind proppant and a substantially altered including, among other things, substantially improved, formation permeability with respect to the flow of cache materials such as oil and/or gas, for materially enhanced extraction dynamics with regard to the same.

In accordance with another aspect of the disclosure, an at least partially degradable downhole tool is provided for use in a wellbore, wherein the downhole tool comprises one or more embodiments of the degradable composition described above. For instance, the degradable downhole tool may include a fluid diverter. In another embodiment, the degradable downhole tool may include a valve. In another embodiment, the degradable downhole tool may include a plug.

In regard to another aspect, the disclosure provides a method for installing a well wall partition adjacent a wall surface of a well hole, wherein the partition includes a substantially fluid-permeable portion selected from the group consisting of a perforated screen, liner, or other device for being positioned along at least a portion of the length of a well's downhole wall adjacent the surrounding formation to, among other things, enable a flow of fluid through the partition and to separate from the fluid, to one side of the partition, at least a significant portion of solid particulate in the fluid flowing therethrough to substantially prevent separated particulate from flowing through the partition to the other side thereof. According to one embodiment, the method includes, among other things, coating at least part of the fluid-permeable portion of the partition with at least one substantially fluid-impermeable degradable polymer in accordance with one or more embodiments of the same as aforedescribed so as to provide a polymer coating thereon including the aforedescribed degradable polymer and which renders at least part of the fluid-impermeable portion of the partition to be rendered substantially fluid-impermeable, positioning at least the coated part of the partition within a subterranean well hole adjacent the wall surface thereof, and causing at least part of the degradable polymer in the coating on the partition to degrade into water-soluble or water-dispersible components so as to render the at least part of the portion of the partition fluid-permeable.

As used herein, the terminology "fluid-permeable," in relation to the aforesaid partition, is intended to mean that fluids, such as fracturing fluids and components and fluids such as formation liquids, are able to flow therethrough at a flow rate; and the terminology "fluid-impermeable," in relation to the partition, is intended to mean the partition's permeability to the flow of fluid therethrough, such as fracturing fluids and components thereof and fluids such as formation liquids, is diminished in relation to the flow rate associated with the fluid-permeable state of the partition. In relation to the degradable polymer, "fluid-impermeable" is intended to mean the polymer, in at least a substantially solid state, as applied to the fluid-permeable portion of the partition, is able to render the same substantially fluid-impermeable.

In certain embodiments of the method, the step of causing degradation of at least part of the degradable polymer includes depolymerizing the degradable polymer, which depolymerization is preferably carried out by, among other things, contacting the polymer with water having a temperature from about 10°C (50 degrees F) to about 32.2 °C (90 degrees F) for at least about 3 days.

Another facet of the disclosure subsists in the provision of a method for hydraulic fracturing ("fracking") a subterranean formation in a region thereof adjacent a well borehole using a degradable polymer composition according to one or more embodiments of the compositional aspects of the disclosure as described above. According to one aspect of the method, the degradable polymer is provided in particleized form, such as by extrusion, pelletizing, pastillation, flaking, or any other suitable method for providing the polymer in small, generally regularly-sized pieces amenable for being slurried and pumped to the downhole area of interest for fracking. The particleized degradable polymer is mixed with a fluid, preferably a liquid, most preferably water, to provide a flowable and preferably pumpable slurry, which slurry is, again, amenable to being pumped down to the bottom hole or other location in the well where it is desired to deploy the polymer material into the formation.

In certain preferred embodiments, the degradable polymer composition in particulate form preferably includes a suitable proppant dispersed therein, in combination with the above-described coating, which limits blocking, sticking, or other undesirable premature agglomeration of polymer composition particles in or adjacent the well structure, as described herein in further detail, until such time as the particles are able to accumulate adjacent the downhole location adjacent the formation area to be fracked. In the embodiment in which proppant is included in the polymer composition, it is believed to be critical that the properties of the degradable polymer component in the composition be such that the proppant be maintained in a generally dispersed phase in the particles until at least such time as at least an adequate pressure-induced distribution of composition particles into and through the formation is attained. To this end, it is a feature of the disclosure that the degradable polymer in the composition, especially when it contains proppant, is selected to cause the composition to exhibit a viscosity which remains at least about 17, 000 mPa·s (cP) substantially throughout the process of distribution of proppant into the formation. It has been observed that when the polymer characteristics (monomer make-up, molecular weight, polymerization processing, and other operative factors) are such that as the composition viscosity begins to dip significantly below about 17,000 cP, at least a clay-based proppant tends to lose its dispersion and fall out of (or separate from) the composition. This condition is to be avoided, at least until such time as the composition has been caused by the force of hydraulic pressure to distribute sufficient proppant into the formation, including into new, hydraulically propagated/created cracks, fissures or veins in and through formation areas. An object of the disclosure is to cause development of permeability via the tracking process using the present disclosure sufficient to cause one or more boreholes to be in flow communication with cache deposits for enhanced permeability and associated speed and quantity of withdrawal, movement, and/or access from, of, and to the same from cache areas into the boreholes following the breaking of the viscous polymer composition and associated deposition of proppant particles. Interestingly, it has also been observed, quite surprisingly, that the viscosity of the polymer composition, at least in the neighborhood of 17,000 mPa·s (cP), appears to be substantially independent of pressure and temperature.

Once again, intense pressure is applied to the viscous form of the composition within the well borehole, as mentioned above, once it sees the downhole temperature for a sufficient time, in the form of a large monolith, agglomerate, as a result of coalescence of composition particles as they quickly lose any applied anti-stick/anti-block coating upon arrival at the deploying location due to design-induced melting of the coating at about the expected downhole water temperature (generally in the range of from about 44 °C to about 82 °C). In regard to this phase of the process, it is noted that the aforementioned design- induced melting and associated liquefaction of coating material also helps achieve separation of liquid coating material from the degrading polymer material due to differences in specific gravity of the materials (typically, at least about 8%; e.g., degradable polymer may generally be about 1.35 and coating material may generally be about 1.25). The pressure required to induce the desired fracture ("fracturing pressure"), which can run 551.6 bar (8,000 psi) and higher, depending on the nature of the strata, can often be determined (at least approximated) from tests on material samples and from empirical data/information.

In a further aspect, the present disclosure also provides a method for acid fracturing of a subterranean rock formation adjacent a well borehole. Certain water- soluble components of the depolymerization breakdown products include acidic monomers having a pKa from about 3.1 to about 4.8. In aqueous media, these constituents, at about this pH, can react with and thereby etch, at least a portion of certain types of formation such as limestone.

### DETAILED DESCRIPTION

The present disclosure provides a novel class of degradable polymers and a composition which includes at least one such degradable polymer. Compositions made from the degradable polymers are solid and may be used to fabricate tools and various other useful articles. After exposure to an appropriate combination of heat and moisture, however, the degradable polymers will substantially depolymerize, first to a viscous liquid form, and finally to water soluble components. In particular, the degradable polymer is a solid when maintained under substantially dry conditions at a temperature of up to about 90 degrees C. When the degradable polymer is contacted with water at a temperature, of up to about 90 degrees C, on the other hand, the degradable polymer initially remains solid for a period of up to about 6 to about 24 hours, then depolymerizes to provide a liquid having a viscosity of from about 1 to about 200,000 mPa·s (centipoise) after a period of time from about 8 hours to about 3 days and then further depolymerizes to water-soluble components after a period of time at least about 3 days.

This degradation process or pathway of the present disclosure stands in contrast to prior art polymers which are only said to decompose, if at all, at much higher and impractical temperatures, well over 100 degrees C. The polymers of the present disclosure decompose at substantially lower temperatures.

Moreover, the degradable polymers of the present disclosure decompose into water-soluble components while leaving substantially no solid residue. Preferably, the amount of solid residue left after the polymers decompose is no more than about 1 % of the initial mass of the degradable polymers, more preferably not more than about 0.2% of the initial mass.

In contrast, earlier commercially available polymers either do not decompose at all or else, they are observed to primarily decompose into grainy, abrasive solid particles rather than water-soluble components.

The moisture and temperature conditions in which the degradable polymers depolymerize correspond to the conditions typically found in subterranean petroleum

extraction wells. Accordingly, compositions made from the degradable polymers of the present disclosure are particularly useful for the fabrication of temporary downhole tools, coatings for sand control devices, and fracture polymers, all of which may be used in petroleum extraction wells

In general, the degradable polymer of the present disclosure includes monomer residues of at least three different types of monomers. The first monomer is preferably selected from the group consisting of L-lactic acid, D-lactic acid, L-lactide, D-lactide, and glycolic acid. The second monomer is also preferably selected from the group consisting ofL-lactic acid, D-lactic acid, L-lactide, D-lactide, and glycolic acid; however, the second monomer is selected so as to be different from the first monomer. The third type of monomer included in the degradable polymer is a compound which is capable of reacting with either the first monomer or the second monomer to form an ester.

L-lactic acid, D-lactic acid, and glycolic acid are each hydroxyacids, that is, compounds having both a carboxylic acid group and a hydroxyl group. L-lactide and D- lactide are dimers of L-lactic acid and D-lactic acid, respectively. Compounds may each be polymerized with one another to form polyesters.

The degradable polymer is preferably composed of (1) from about 20 to about 80 mole percent monomer residues of the first monomer; (2) from about 20 to about 80 mole percent monomer residues of the second; and (3) from about 0.001 to about 32 mole percent monomer residues of the third monomer.

For instance, in one embodiment, the degradable polymer may be composed of from about 70 to about 80 mole percent monomer residues of L-lactic acid and from about 20 to about 30 mole percent monomer residues of glycolic acid.

In a second embodiment, the degradable polymer may be composed of from about 70 to about 80 mole percent monomer residues of L-lactic acid and from about 20 to about 30 mole percent monomer residues of D-lactic acid.

In a third embodiment, the degradable polymer may be composed of from about 50 to about 99.5 mole percent monomer residues of L-lactide and from about 0.5 to about 50 mole percent monomer residues of D-lactide.

As noted above, the degradable polymer also includes monomer residues of at least one compound which is capable of reacting with either the first monomer or the second monomer to form an ester. That is, the third monomer provides either (1) one or more carboxylic acid groups; or (2) one or more hydroxyl groups. However, the third monomer is a compound which does not provide both a carboxylic acid group and a hydroxyl group.

In certain embodiments, this ester-forming compound may be selected from the group consisting of (i) a monofunctional or multifunctional alcohol; (ii) a monofunctional or multifunctional carboxylic acid; (iii) an anhydride that yields a monofunctional or multifunctional carboxylic acid upon reaction of the anhydride; and (iv) a monofunctional or multifunctional epoxide.

More particularly, the ester-forming compound may be selected from the group consisting of (i) a monofunctional or multifunctional alcohol having from 1 to 16 hydroxyl groups; (ii) a monofunctional or multifunctional carboxylic acid having from 1 to 16 carboxylic acid groups; (iii) and an anhydride that yields a monofunctional or multifunctional carboxylic acid having from 2 to 16 carboxylic acid groups upon reaction of the anhydride.

For instance, in certain embodiments, the ester-forming compound may be a multifunctional alcohol selected from the group consisting of pentaerythritol, glycerine, 1,3 - propanediol, 1,4-butanediol, 1,6-hexanediol, trimethyolpropane, dendritic polyols having up to 16 hydroxyl groups, dipentaerythritol, and mixtures thereof.

Pentaerythritol is particularly preferred multifunctional alcohol.

In certain other embodiments, the ester-forming compound may be a polymer, such as a polyvinyl alcohol or a polyacrylic acid.

In other embodiments, the ester-forming compound may a multifunctional carboxylic acid selected from the group consisting of adipic acid, succinic acid, sebacic acid, and mixtures thereof.

In still other embodiments, the ester-forming compound may be a cyclic anhydride that yields a multifunctional carboxylic acid selected from the group consisting of trimellitic anhydride, pyromellitic anhydride, and mixtures thereof.

Without being bound by theory, the ester-forming compounds described above are believed to act as a central core from which the polymers grow outward. The concentration of the ester- forming compound thereby dictates the number of monomeric units which can be attached to each one before all of the available monomer is consumed. Thus, inclusion of a controlled but relatively small amount of an ester-forming compound, allows for improved control of the ultimate molecular weight of the degradable polymer. Improved control of the polydispersity index of the degradable polymer may also be achieved.

In this regard, according to certain embodiments of the present disclosure, the degradable copolymer preferably has a number average molecular weight of from about

3000 to about 22,000. In certain embodiments, it is also preferred that the degradable copolymer has a polydispersity index of from about 1.0 up to about 3.0.

According to some embodiments, the composition may also include up to about 5 weight percent of polylactic acid having a number average molecular weight of greater than about 25,000.

As noted above, the degradable polymers of the present disclosure, and compositions including such degradable polymers, may be used in a variety of downhole applications in subterranean petroleum extraction wells.

For instance, in one embodiment, a fluid diverter may be fabricated in whole or in part from the degradable polymers of the present disclosure. Other downhole tools such as valves and /or plug may also be fabricated in whole or in part from the degradable polymers of the present disclosure. The degradable tools, or portions thereof, may be

fabricated from the degradable polymer by injection molding, casting, extrusion, and other methods.

The degradable downhole tools of the present disclosure may be inserted into a wellbore and used for a temporary purpose therein. Thereafter, the polymer, and the tool formed therefrom, degrades into water-soluble components, leaving an unobstructed wellbore.

In addition, the degradable polymers of the present disclosure may be used to provide a temporary coating over a perforated screen or liner when the screen is initially installed within the wellbore. Perforated screens or liners are typically installed within petroleum wellbores in order to filter out a portion of the sand and other particulates which would otherwise be entrained within the petroleum product as it is extracted from the well. Such sand screens are typically formed from stainless steel mesh having a mesh size of from about 0.254mm (0.01 inches) to about 2.54mm (0.1 inches). In order to effectively filter out particulates once the well is in operation, it is important that the mesh of the sand screen does not become plugged or clogged when the screen is initially placed within the well.

According to the present disclosure, clogging of the sand screen may be prevented by application of a temporary coating of the degradable polymer. The degradable polymer may be heated to a substantially molten state and dipping or spray coating may apply then coating of the polymer to the sand screen, such as. The coating is then allowed to cool and re-solidify. While this coating operation may be carried out at ambient room conditions, care is preferably taken to eliminate unnecessary exposure of the coating to moisture.

The coated sand screen is then positioned in the subterranean well hole in a conventional manner. During this initial installation, the polymer coating remains intact over the mesh openings and prevents sand and debris from clogging the mesh. Once the screen is positioned within the well, however, the polymeric coating is then exposed to the environmental conditions within the wellbore. Typically, the temperature within the wellbore will range from about 50 degrees C to about 90 degrees C. In addition, any materials within the wellbore will be exposed to moisture, in the form of groundwater, on a substantially continuous basis.

The aforementioned environmental conditions are sufficient to cause the degradable polymer coating to begin to depolymerize. Thus, the initially-solid coating of degradable polymer depolymerizes within the wellbore to provide a liquid having a viscosity of from about 1 to about 200,000 mPa·s (centipoise) after a period of time from about 8 hours to about 3 days. The viscous liquid then further depolymerizes to water-soluble components after a period of time at least about 3 days. Within a few days after initial installation within the wellbore, the degradable polymer coating is therefore converted to water-soluble degradation products which are readily diluted and diffused by groundwater by groundwater thereby removing the coating from the perforated sand screen or liner. The sand screen is thus advantageously installed within the well without clogging or plugging of the screen mesh.

In another instance, the degradable polymer of the present disclosure may be utilized in a method for hydraulic fracturing of a subterranean rock formation adjacent a well borehole in order to increase the permeability of the rock formation and facilitate extraction of the petroleum via the wellbore.

According to this method, the degradable polymer is mixed with a proppant material, and this mixture is then formed into solid pellets. In a preferred embodiment, the degradable polymer is heated to a substantially molten state and mixed with the proppant using an auger. The resultant mixture is formed into suitable particles, for example, the form of pellets, as by a pastillation process. The solid pastilles or pellets formed by this process may generally range from about 3.175mm (0.125 inch) to about 6.35 (0.25 inch) in diameter. The composition of the pellets is generally from about 55 to about 73 weight percent of the degradable polymer and from about 27 to about 45 weigh percent of the proppant. Preferred proppant materials include sand and sintered clay. The average particle size of the proppant is preferably from about 20 mesh to about 40 mesh.

Alternatively, solid pellets of the degradable polymer proppant mixture may be formed by other means such as extrusion. Forming methods such as extrusion may be less desirable, however, due to the abrasiveness of the proppant material and the wear and damage which the proppant may cause within the extrusion equipment.

The solid pellets are then mixed with a pumpable fluid such as water, and the fluid and the solid pellets mixed therein are pumped in the form of a slurry down the borehole and into the rock formation. Once exposed to the heat and moisture levels within the well, the degradable polymer of the pellets begins to partially depolymerize into a viscous liquid after a time period of from about 6 to about 24 hours. The viscous liquid typically has a viscosity of from about 1 to about 200,000 mPa·s (centipoise). The proppant is dispersed within this viscous liquid.

At this point, hydraulic pressure is then applied to the viscous liquid within the well borehole using a cavity pump. The hydraulic pressure applied is sufficient to squeeze and flow the viscous polymer composition monolith through openings in the adjacent well structure (a well screen or perforated wall) and into pressing engagement with small or initially accessible cracks, openings, and the like in the adjacent formation. Once all available spaces are occupied, the fracturing pressure is sufficient to induce fracturing, cracking, and other modes of porositizing the adjacent rock formation via hydraulic pressure applied through the flowable, viscous polymer composition. The application of this elevated pressure also forces both the viscous polymer and proppant dispersed therein into and through fractures and cracks created within the rock formation.

Once the viscous liquid and proppant have been forced into the fractures formed in the rock formation, the viscous liquid then further depolymerizes, first into a thinner liquid, and eventually into water-soluble fragments and monomers. These materials are readily diluted and diffused away by groundwater while leaving the proppant in place within the rock fractures.

In addition to hydraulic fracturing, the degradable polymer of the present disclosure may also be used in acid fracturing of subterranean rock formations. Acid fracturing is particularly useful in the preparation of subterranean rock formations having a high concentration of carbonates and similar minerals which may be dissolved in acidic solution.

According to this method, the degradable polymer is also formed into solid pellets as in hydraulic fracturing. Unlike hydraulic fracturing, however, it may not be necessary that the solid pellets include a proppant material, along with the degradable polymer.

Similarly to hydraulic fracturing, the solid pellets are mixed with a pumpable fluid such as water, and the fluid and solid pellets are pumped down the borehole and into the rock formation. Once exposed to the heat and moisture levels within the well, the degradable polymer of the pellets beings to partially depolymerize into a viscous liquid after a time period of from about 6 to about 24 hours. The viscous liquid typically has a viscosity of from about 1 to about 200,000 mPa·s (centipoise).

At this point, hydraulic pressure is then applied to the viscous liquid within the well borehole using a cavity pump. The hydraulic pressure applied is sufficient to induce fracturing of the adjacent rock formation. The application of this elevated pressure also forces both the viscous liquid into the fractures created within the rock formation.

Once the viscous liquid has been forced into the fractures formed in the rock formation, the viscous liquid then further depolymerizes into water-soluble components. Due to the acidic nature of the monomers originally used to form the degradable polymer, these water-soluble components are also acidic in nature and typically include acidic monomers having a pKa from about 3.1 to about 4.8. The presence of these acidic monomers in the fractures, in aqueous media, etches at least a portion of the rock formation thereby increasing the permeabil formation to petroleum and facilitating extraction of the petroleum via the wellbore.

It is another feature of the disclosure to include a wax-like coating on degradable polymer composition in particle form. This is especially advantageous with embodiments where the degradable polymer is formulated to have relatively lower softening point in the range of from about 43.3 °C (110° F) to about 60°C (140° F), where problems may arise with premature agglomeration of particles and plugging or clogging of the well structure with particle agglomerates before they are deployed at the downhole location. To prevent the polymer particles from agglomerating and/or sticking to the well casing when exposed to warm water, a novel protective coating of a crystalline wax-like hydrolytically degradable polymer was also developed.

In addition to being hydrolytically degradable like the polymer, these wax-like coatings are well suited as a temporary protective barrier or low softening point materials. For example their rapid rate of crystallization and low melting point mean that they can be easily applied to low softening point materials without the need for excessive heating that would otherwise cause the particles to adhere to each other during the coating process. The low melt viscosity of the waxy polymer means that they can be applied as a fine spray, thereby reducing the amount of polymer required to provide an effective barrier layer. The sharp crystalline melting point of the waxy coatings means they can be tailored to a particular range of well temperatures. For example, for a well with a bottom hole temperature of 48.9 °C (120°F) would employ a wax-like coating with a melting point near that temperature so that the polymer particles would protected during the placement process but the waxy coating would melt once the particle reached the bottom of the well.

The coating protects the particles during the placement process such that the particles don't adhere to each other or to the sides of the well tubing while traversing from the surface to the bottom of the well through the column of warm water in the tubing. Said waxy coating has numerous features that make it an ideal coating for this purpose - it is hydrolyzable, has a low melt viscosity (for spray application of a thin coating) and a melting point that matches the bottom hole temperature so that it does not impede the rate of viscous liquid formation or the quality of the same.

### Example 1 - Preparation of Degradable Lactic Acid - Glycolic

### Acid - Pentaerythritol Terpolymers by Condensation Reaction.

A two liter pear-shaped flask was charged with 971 grams of an 88 weight percent solution of L (+)-lactic acid (855 grams dry basis) from PURAC, 381 grams of a 70 weight percent solution of glycolic acid (267 grams dry basis) from DuPont, and 4.4 grams of pentaerythritol from Perstorp. As a catalyst, 1.36 grams of tin (II) octoate from Alfa Aesar was also included. The flask was placed on a rotating evaporator and heated to a temperature of about 180°C at 50-75 rpm and atmospheric pressure. At a temperature of about 160°C, water began to distill from the reaction flask and was collected in the receiving flask of the rotating evaporator.

After a period of about 2-3 hrs, about 40% of the total water was collected in the receiving flask. At this time, a vacuum was applied to the reaction mixture. The pressure was reduced in a stepwise fashion (a reduction of about 13.3 kPa(100 Torr) every 30 minutes) over a 2-3 hour period. When a pressure of about 6.7-10 kPa (50-75 Torr) was reached, and the reaction mixture produced no more water, the temperature of the reaction mixture was raised to 190°C. The flask was heated for an additional 8-10 hours for a total reaction time of approximately 12-16 hours. During this period, traces of lactide accumulated in the condenser and the reaction mixture was observed to increase in viscosity. The reaction was considered complete and stopped when: (1) the viscosity of a sample measured 4,000-10,000 mPa·s (cps) @ 127°C and (2) the content of volatile materials in the product (as determine by gravimetric loss of a sample heated to 180°C for 3 minutes) was < 0.18 weight percent. The final polymer was observed to be a brownish red, brittle solid and to have a ring and ball softening point of about 72°C.

### Example 2- Preparation of Degradable D-Lactide- L-Lactide- 1,4-Butandiol Terpolymers by Ring Opening Polymerization.

A one liter pear-shaped flask was charged with 68.4 grams of L (+)-lactide (PURAC) and 3.6 grams of D (-)-lactide (PURAC). The flask was placed on a rotating evaporator fitted with a gas inlet tube and rotated at about 50 rpm. Dry nitrogen gas was slowly bubbled through the mixture at a rate of approximately 0.28 1/min (0.01 cubic feet per minute (cfm)), and the temperature of the mixture was gradually raised to about 120°C. After about 0.5 hour, the lactide mixture had melted and 1.13 grams of 1 ,4-butandiol (BASF) was added, along with 34 mg of tin (II) octoate catalyst. The temperature of the reaction mixture was then raised to about 170°C, and the rotational speed of the flask was increased to about 75-100 rpm. Soon after the butanediol and tin catalyst were added, the viscosity of the mixture was observed to increase markedly. Heating was continued for about an additional hour or until samples subjected to infrared spectroscopy showed that disappearance of peaks associated with lactide (1,240 cm-1 C-C-0 stretch; 1,055 cm-1 C-0-C stretch; 935 cm-1 C-0 stretch). The final polymer was observed to be a clear, brittle solid with a melting point of about 97°C.

### Example 3 - Preparation of Degradable D-Lactic Acid - L-Lactic Acid - 1 ,4- Butandiol Terpolymers by Condensation Reaction.

A one liter pear-shaped flask was charged with 430 grams of an 88 weight percent solution of L-lactic acid (378 grams dry basis) from PURAC, 180 grams of a 90 weight percent solution ofD-Lactic acid (162 grams dry basis) from PURAC, and 5.4 grams of 1 ,4-butandiol from BASF. As a catalyst, 0.53 grams of tin (II) octoate from Alfa Aesar was also included. The flask was placed on a rotating evaporator and heated to a temperature of about 180°C at 50-75 rpm and atmospheric pressure. At a temperature of about 160°C, water began to distill from the reaction flask and was collected in the receiving flask of the rotating evaporator.

After a period of about 2-3 hrs, about 40% of the total water was collected in the receiving flask. At this time, a vacuum was applied to the reaction mixture. The pressure was reduced in a stepwise fashion (a reduction of about 13.3 kPa (100 Torr) every 30 minutes) over a 2-3 hour period. When a pressure of about 6.7-10 kPa (50-75 Torr) was reached, and the reaction mixture produced no more water, the temperature of the reaction mixture was raised to 190°C. The flask was heated for an additional 8-10 hours for a total reaction time of approximately 12-16 hours. During this period, traces of lactide accumulated in the condenser and the reaction mixture was observed to increase in viscosity. The reaction was considered complete and stopped when: (1) the viscosity of a sample measured 1,000-2,000 mPa·s (cps) @ 127°C and (2) the content of volatile materials in the product (as determine by gravimetric loss of a sample heated to 180°C for 3 minutes) was < 0.18 weight percent. The final polymer was observed t be an amber colored brittle solid and to have a melting point of about 65°C.

### Example 4- Degradation Rate and Viscosity

In this Example, the degradation properties of the terpolymer of Example 1 were compared to three commercially available polylactic acid (PLA) compositions: (1) PLA 8300D, (2) PLA 4042D, and (3) PLA 3251 D, all from Natureworks LLC.

For each of the four polymers, a solid sample was initially weighed. The samples were then each placed in separate vials containing an excess of water. The vials were then heated to approximately 82°C and held at that temperature for about 72 hours (3 days) in order to simulate the expected conditions in an underground wellbore. Periodically, the solid sample was reweighed. Any changes (loss) in the sample weight indicate the amount of initially-solid polymer which has depolymerized to a liquid degradation product. When applicable, the viscosity of the liquid degradation product was measured as well. The measured data are shown in the following tables:

| Polymer | Sample Percent Weight Loss | | | | |
|---|---|---|---|---|---|
| | 4 hrs | 11 hrs | 24 hrs | 48 hrs | 72 hrs |
| Example 1 | 0 | 0 | 12 | 91 | 100 |
| PLA 8300D | 0 | 0 | 0 | 0 | 10 |
| PLA4042D | 0 | 0 | 0 | 0 | 2 |
| PLA 3251D | 0 | 0 | 0 | 0 | 0 |

| Polymer | Liquid Viscosity in mPa·s (cps) | | | | |
|---|---|---|---|---|---|
| | 4 hrs | 11 hrs | 24 hrs | 48 hrs | 72 hrs |
| Example 1 | 11,700 | 880 | 420 | <200 | no residue |
| PLA 8300D | N/A (solid) | N/A (solid) | N/A (solid) | N/A (solid) | N/A (solid) |
| PLA4042D | N/A (solid) | N/A (solid) | N/A (solid) | N/A (solid) | N/A (solid) |
| PLA 3251D | N/A (solid) | N/A (solid) | N/A (solid) | N/A (solid) | N/A (solid) |

The above data demonstrates that the polymer of Example 1 degrades from an initial solid state into a viscous liquid stage in just a matter of hours and then becomes a very thin liquid within about 48 hours. After about 72 hours, the polymer of Example 1 has degraded to completely water soluble materials leaving behind no solid residue.

On the other hand, all three of the commercial PLAs degraded only by slow dissolution from a solid state. The most amorphous PLA grade of the three shown (PLA 8300D) showed only a 10% loss of its initial mass after three days at 82°C while the most crystalline of the PLA grades (PLA 325 ID) show no measurable degradation at all after three days at 82°C. None of the three commercial PLAs was observed to degrade into a viscous liquid or into water soluble liquid components with no solid residue.

These results are particularly notable since certain prior art references such as US 7,166,560 suggest that commercial PLA resins such as PLA 4042D will rapidly disintegrate at temperatures in the range of about 149°C. Such extreme temperatures are rarely encountered in actual oilfield wellbores, however, with temperatures in the range of about 40-88°C being much more typical in the field. At these more representative temperatures, the above results demonstrate that commercially available PLAs degrade much more slowly, if they degrade at all.

### Example 5- Effect of Composition on Degradation Pathway (Liquid vs. Solid).

In this example, samples of polymers of L-lactic acid, glycolic acid, and pentaerythritol were prepared. The mole percentages of L-lactic acid and glycolic acid were varied as shown in the following table. Each of the samples also included 0.25 mole percent pentaerythritol. These samples were then heated to a temperature of about 60°C in the presence of water and allowed to depolymerize. After depolymerizing, the physical state (liquid or solid) of the resultant degradation products was observed and recorded. The results were as follows:

| Mole% of L-Lactic Acid Monomer Units | Mole % of Glycolic Acid Monomer Units | Physical State of Degradation Products |
|---|---|---|
| 100 | 0 | Solid |
| 85 | 15 | Solid |
| 80 | 20 | Solid |
| 78 | 22 | Solid |
| 75 | 25 | Liquid |
| 73 | 27 | Liquid |
| 70 | 30 | Liquid |

Similarly, samples of polymers of L-lactic acid, D-lactic acid, and pentaerythritol were prepared. The mole percentages of L-lactic acid and D-lactic acid were varied as shown in the following table. Each of the samples also included 0.25 mole percent pentaerythritol. These samples were also heated to a temperature of about 60°C in the presence of water and allowed to depolymerize. After depolymerizing, the physical state (liquid or solid) of the resultant degradation products was observed and recorded.
The results were as follows:

| Mole% of L-Lactic Acid Monomer Units | Mole% of D-Lactic Acid Monomer Units | Physical State of Degradation Products |
|---|---|---|
| 100 | 0 | Solid |
| 85 | 15 | Solid |
| 70 | 30 | Liquid |
| 50 | 50 | Liquid |

These results demonstrate that the proportion or ratio of L-lactic acid to glycolic acid (or L-lactic acid to D-lactic acid) -has a profound effect on the final physical state of the polymer as it is hydrolytically degraded. When the ratio of L-lactic acid to the second monomer (either glycolic acid or D-lactic acid) is relatively high, the polymer turns into solid particulates as it degrades. As the ratio of L-lactic acid to the second monomer become smaller, however, it is observed that the degradation proceeds through a viscous liquid stage and not through a particulate solid stage.

For both L-lactic acid polymerized with glycolic acid and D-lactic acid, the change in phase from solid to liquid occurs at similar mole percentages (about 25% for glycolic acid and about 30 % for D-lactic acid). Without being bound by theory, it is believed that at these mole percentages, the amount of the second monomer ((either glycolic acid or D-lactic acid) is sufficient to significantly disrupt the crystalline structure of the first monomer (L-lactic acid). This in turn is believed to increase the amorphous character of the polymer, thus making it more susceptible to hydrolytic degradation.

In a further test, samples of degradable polymers made from L-lactic acid, glycolic acid, and pentaerythritol were prepared and then degraded at two different temperatures (60°C and 82°C) to observe the effect of temperature on the nature of the degradation products. The results are summarized in the following table:

| Mole% of L-Lactic Acid Monomer Units | Mole% of Glycolic Acid Monomer Units | Degradation Temperature | Physical State of Degradation Products |
|---|---|---|---|
| 78 | 22 | 60°C | Solid |
| 78 | 22 | 82°C | Liquid |

These results demonstrate that the nature of the degradation products (i.e., the degradation pathway) depends on both the composition of the polymer and the temperature at which the polymer is depolymerized.

### Example 6 - Extended Study of Degradation Rate and Viscosity

In this Example, the degradable polymers of Examples 1 and 2 were blended. The blend included about 88 weight percent of the terpolymer of Example 1 and about 12 weight percent of the copolymer of Example 2. The degradation properties of the blend were studied for an extended period lasting about 15 days. A solid sample of the polymer was initially weighed. The sample was then each placed in a vial containing an excess of water, and the vial was heated to approximately 88°C and held at that temperature for a total of 371 hours (15 days) in order to simulate the expected conditions in an underground wellbore. Periodically, the solid sample was reweighed. Any losses in the sample weight indicate the amount of initially- solid polymer which has depolymerized to a liquid degradation product. When applicable, the viscosity of the liquid degradation product was measured as well. The measured data are shown in the following table:

| Time (hours) | Mass (Percentage of Initial Mass) | Viscosity in mPa·s (cps) at 88 degrees C |
|---|---|---|
| 1.5 | 104 | N/A (solid) |
| 7.5 | 106 | N/A (solid) |
| 11.5 | 104 | N/A (solid) |
| 19.5 | 103 | N/A (solid) |
| 23.5 | 94 | 72,500 |
| 26 | 85 | 1,360 |
| 33.5 | 65 | 2,825 |
| 35.5 | 61 | 1,918 |
| 36.5 | 56 | 2,512 |
| 40 | 51 | 1,208 |
| 49 | 34 | <200 |
| 54 | 23 | <200 |
| 62 | 20 | <200 |
| 70 | 16 | <200 |
| 91 | 13 | <200 |
| 107 | 11 | <200 |
| 149 | 6 | <200 |
| 245 | 4 | <200 |
| 371 | 0.2 | <200 |

The small initial increase in mass observed during the first day of the testing is believed to be due to adsorption of moisture by the initially-solid polymer blend.

### Example 7- Preparation of Polymer I Proppant Pastilles

In this example, pastilles of degradable polymer containing proppant were produced using a Sandvik Rotoform pastillator. The degradable polymer heated to a temperature of about 160°C and then pumped as a melt to an auger system. Proppant was also gravimetrically fed to the auger. In one test, the proppant was sand which had been classified using a 20 to 40 mesh screen (0.45-0.48 mm diameter). In a second test, the proppant was a sintered clay (ECONOPROP, available from CarboCeramics). The proppants were mixed with the polymer in the auger at a target rate of about 27 to about 45 weight percent. The mixture was then pumped to the rotoform head of the pastillator. The pastillator head temperature was set at 177°C and the head rotated at 22 rpm.

The pastilles were expressed from the rotoform head onto a moving stainless steel belt that was cooled by means of chilled water from below the belt to about 16°C. The belt speed was about 0.15 m/s (30 feet per minute (fpm)), and the pastilles were doctored off the end of the belt into containers and stored in fiber drums. The average diameter of the pastilles formed ranged from about 3.175mm (0.125 inch) to about 6.35mm (0.25 inch).

### Synthesis of the hydrolysable, waxy coating

Poly (hexamethylene adipate) was synthesized by a modification of the method of Carothers (1929). Briefly, 591 gm 1 ,6-hexanediol (5 mol., BASF) and 731 gm adipic acid (5 mol.,) were combined in a two liter pear-shape flask. The flask was placed on a rotating evaporator and heated to 180°C at 50-75 rpm and atmospheric pressure. At about 160°C water began to distill from the reaction flask and was collected in the receiving flask of the rotating evaporator.

After about 2-3 hrs, about 75% of the total water was collected and reaction had reached a temperature of 225°C. At this time, a vacuum was applied to the reaction mixture. The pressure was reduced in a stepwise fashion over a 30 min period to about 6.7 kPa (50 torr). After two hours at this temperature and pressure 97% of the water was recovered and no further water was produced. The reaction was stopped and the content poured out to yield a white, brittle solid with a melting point of 52-54°C.

### Spray coating degradable polymer particles with poly(hexamethylene adipate) (PHA)

Degradable polymer (K0309120) pastilles were spray coated by tumbling the pastilles in a rotating drum at 60 rpm while at the same time spraying them with molten PHA. To produce a fine spray of PHA an industrial paint sprayer was modified in two ways: (1) inlet air (103 kPa) (15 psi) was passed through a heated copper tubing to bring the air temperature to 43.3 °C (110°F) and (2) the aluminum paint reservoir was fitted with a band heater that was set to a temperature of 149-177 °C (300-350°F). Final coat weight obtained by this method was 2% of the pastille weight.

### Results

Degradation rate. Degradable polymer with and without the PHA coating were placed in vials (4 gm polymer, 16 gm water) set in a water bath at 48.9 °C (120°F). The time to degradation to a viscous liquid and complete degradation to monomeric component is shown in Table 1 :

**Table 1 : Effect of degradable wax coating on polymer aqueous degradation rate, 120°F**

| Polymer | Time to Viscous Liquid, Days | Time Complete Degradation, Days |
|---|---|---|
| K0309120 | 2 | 5 |
| K0309120 w/2% PHA coating | 2 | 5 |

Table 1 shows that the wax polymer coating did not impede the degradation rate of polymer K0309120 as indicated by the lack of change in the viscosification and the degradation rate. As the polymer pastille coalesced into a single mass, the PHA coating was observed to liquify and rise to the surface on the mass of K0309120. This is consistent with the difference in specific gravity between the two materials - K0309120 and PHA have specific gravities of 1.47 and 1.25, respectively. After five days, the K0309120 was completely degraded to monomer but the PHA remained as oil droplets in the bottom of the vial.

Adhesion rate. Uncoated pastilles of K0309120 do not stick to reach other in room temperature water (22.2 °C) (72°F) until 20-30 min exposure. On the other hand, pastille of K0309120 adhere instantly to themselves at a water temperature of 29.4 °C(85°F). When liquid paraffin is substituted for water, K0309120 particles are less sticky and do not adhere to each other until a temperature of 44.4°C (112°F).

However, when coated with 2% PHA, pastilles of K0309120 did not adhere to each other until a temperature of 50°C (122°F) - a temperature coincident with the melting point of PHA. Thus, PHA can be used to coat particles of K0309120 and place them in wells with bottom hole temperatures of 48.9°C (120°F) without the concern that the pastille would bridge in the pipe and stop flow of material.

### Advantages Over Prior Practice

Hydraulic fracture with fracture fluid produced during the course of poly(lactide) degradation provides oil producers with a simple, effective, low cost, and environmentally friendly tool for enhanced hydrocarbon recovery. It will allow zones which were previously considered to be economically unproductive to large producers to be tapped by small producers that have limited resources and smaller budgets. This increases the ultimate gas recovery and production from the available reserves in the U.S. It increases the reserves that can be recovered economically.

This technology can be especially beneficial when used on marginal wells known as stripper wells. These are wells that produce 1.6m³(10 barrels) or 1699m³ (60 thousand cubic feet) of natural gas per day or less. The oil and gas zones are typically only a few feet thick and would benefit greatly from a small fracture treatment. Since the fluid volume of an degradable polymer application is restricted by the pipe volume, it is ideal for small treatments such as this. It could even be used to restimulate stripper wells to increase end of life production. As of 2008, there were 375,000 stripper wells producing 262 million barrels of oil per day - 20% of the nation total production (See National Stripper Well Association's website, 2013) if this technology could increase stripper well production by just 0.2%, that would add another 600,000 bpd to the domestic supply.

The NFT has many environmentally friendly operational advantages. Advantages include the reduced requirement of expensive high hydraulic horsepower pumps. Fracture initiation with degradable polymer is achieved at lower pump rates due to its high viscosity and also due to the polymer and proppant already being located at the perforations prior to pumping. It completely eliminates the need for complicated and costly blenders, toxic chemical additives, frac tanks, and proppant delivery equipment. This in turn reduces cost and the equipment footprint on location.

The unique characteristics of the viscous liquid produced by the degrading polymer also provide many fluid advantages. It is a non-damaging fluid that will not leave behind any formation clogging polymer. Typical fracturing fluids that are commercially available leave a residue of polymer in the formation that greatly reduces the permeability. The final products of complete polymer hydrolysis are soluble organic acids, which may further stimulate the formation, especially in carbonaceous rock. It also achieves a very high viscosity while providing low friction pressures during pumping.

The bio-based polyesters utilized are degradable and environmentally friendly. The degradable nature eliminates the need for breakers and other chemical additives, therefore reducing the health risks and hazards associated with these chemicals. Degradable poly(lactide) is transported in a solid form which eliminates the potential for liquid spills. The reduced fluid volume and required equipment drastically reduces the equipment footprint. This in turn reduces the fuel consumption and air emissions of the fracturing operations. The less equipment also reduces the heavy truck traffic on small county and lease roads leading to the well site. This also reduces noise emissions in urban and environmentally sensitive areas.

The foregoing description of preferred aspects for this disclosure has been presented for purposes of illustration and description. It is not intended to be exhaustive or to limit the invention to the precise form disclosed. Obvious modifications or variations are possible in light of the above teachings. The aspects are chosen and described in an effort to provide the best illustrations of the principles of the disclosure and its practical application, and to thereby enable one of ordinary skill in the art to utilize the disclosure in various aspects and with various modifications as are suited to the particular use contemplated. All such modifications and variations are within the scope of the invention as determined by the appended claims when interpreted in accordance with the breadth to which they are fairly, legally, and equitably entitled.

## Claims

1. A composition comprising a plurality of particulates for being flowed, under the influence of hydraulic pressure, from a downhole fracking position inside a subterranean well structure through openings in the well structure into fractures and cracks in an adjacent subterranean formation to aid in a fracking process for enhancing the permeability of the formation through development of fractures or cracks therein, wherein:
each of the particulates comprises at least one degradable polymer and a barrier coating applied over the degradable polymer;
the degradable polymer comprises:
from 20 to 80 mole percent monomer residues of a first monomer selected from the group consisting of L-lactic acid, D-lactic acid, L-lactide, D-lactide, and glycolic acid;
from 20 to 80 mole percent monomer residues of a second monomer, which is different from the first monomer, selected from the group consisting of L-lactic acid, D-lactic acid, L-lactide, D-lactide, and glycolic acid; and
from about 0.001 to about 32 mole percent monomer residues of at least one compound which is capable of reacting with either the first monomer or the second monomer to form an ester, such that the degradable polymer is solid when maintained under dry conditions at a temperature up to 90° C and, when maintained in contact with water in the well at the downhole fracking location at a formation temperature of from 44° C up to 82° C, commences gradual degradation by reason of hydrolysis to a highly viscous, flowable liquid, which is flowable under the influence of hydraulic pressure outwardly of the well structure, through the well structure openings and into cracks and fractures in the adjacent formation to transmit to the formation hydraulic pressure forces applied thereto, and to thereby induce cracking and fracturing in the formation and further flowing of the polymer into and through the cracks and fractures created in the formation; and
the barrier coating comprises a crystalline wax-like hydrolytically degradable polymer material having a melting temperature that matches the bottom hole temperature,
whereby continued hydrolysis of the polymer causes the polymer to completely degrade to water-soluble components after at least 3 days.

2. The composition of claim 1, wherein the at least one compound which is capable of reacting with either the first monomer or the second monomer to form an ester is selected from the group consisting of (i) a monofunctional or multifunctional alcohol; (ii) a monofunctional or multifunctional carboxylic acid; (iii) an anhydride that yields a monofunctional or multifunctional carboxylic acid upon reaction of the anhydride; and (iv) a monofunctional or multifunctional epoxide.

3. The composition of claim 1, wherein the first monomer is L-lactic acid, the second monomer is glycolic acid and wherein the degradable polymer comprises from 70 to 80 mole percent monomer residues of the first monomer and from 20 to 30 mole percent monomer residues of the second monomer.

4. The composition of claim 1, wherein the first monomer is L-lactic acid, the second monomer is D-lactic acid and wherein the degradable polymer comprises from 70 to 80 mole percent monomer residues of the first monomer and from 20 to 30 mole percent monomer residues of the second monomer.

5. The composition of claim 1, wherein the first monomer is L-lactide, the second monomer is D-lactide and wherein the degradable polymer comprises from 50 to 99.5 mole percent monomer residues of the first monomer and from 0.5 to 50 mole percent monomer residues of the second monomer.

6. The composition of claim 1, wherein the composition further comprises up to 5 weight percent of polylactic acid having a number average molecular weight of greater than 25,000.

7. The composition of claim 2, wherein the at least one compound which is capable of reacting with either the first monomer or the second monomer to form an ester is selected from the group consisting of (i) a monofunctional or multifunctional alcohol having from 1 to 16 hydroxyl groups; (ii) a monofunctional or multifunctional carboxylic acid having from 1 to 16 carboxylic acid groups; (iii) and an anhydride that yields a monofunctional or multifunctional carboxylic acid having from 2 to 16 carboxylic acid groups upon reaction of the anhydride.

8. The composition of claim 1, wherein the at least one compound which is capable of reacting with either the first monomer or the second monomer to form an ester comprises a multifunctional alcohol selected from the group consisting of pentaerythritol, glycerine, 1 ,3-propanediol, 1 ,4-butanediol, 1,6-hexanediol, trimethyolpropane, dendritic polyols having up to 16 hydroxyl groups, dipentaerythritol, and mixtures thereof.

9. The composition of claim 1, wherein the at least one compound which is capable of reacting with either the first monomer or the second monomer to form an ester comprises a polymer.

10. The composition of claim 1, wherein the at least one compound which is capable of reacting with either the first monomer or the second monomer to form an ester comprises a polyvinyl alcohol.

11. The composition of claim 1, wherein the at least one compound which is capable of reacting with either the first monomer or the second monomer to form an ester comprises a polyacrylic acid.

12. The composition of claim 1, wherein the at least one compound which is capable of reacting with either the first monomer or the second monomer to form an ester comprises pentaerythritol.

13. The composition of claim 1, wherein the at least one compound which is capable of reacting with either the first monomer or the second monomer to form an ester comprises a multifunctional carboxylic acid selected from the group consisting of adipic acid, succinic acid, sebacic acid, and mixtures thereof.

14. The composition of claim 1, wherein the at least one compound which is capable of reacting with either the first monomer or the second monomer to form an ester comprises a cyclic anhydride that yields a multifunctional carboxylic acid selected from the group consisting of trimellitic anhydride, pyromellitic anhydride, and mixtures thereof.

15. A method of fracking a subterranean formation in a region thereof adjacent a well borehole comprising flowing a plurality of particulates, under the influence of hydraulic pressure, from a downhole fracking position inside a subterranean well structure through openings in the well structure into fractures and cracks in an adjacent subterranean formation to aid in a fracking process for enhancing the permeability of the formation through development of fractures or cracks therein, wherein:
each of the plurality of particulates comprises at least one degradable polymer and a barrier coating applied over the degradable polymer;
the degradable polymer comprises:
from 20 to 80 mole percent monomer residues of a first monomer selected from the group consisting of L-lactic acid, D-lactic acid, L-lactide, D-lactide, and glycolic acid;
from 20 to 80 mole percent monomer residues of a second monomer, which is different from the first monomer, selected from the group consisting of L-lactic acid, D-lactic acid, L-lactide, D-lactide, and glycolic acid; and
from about 0.001 to about 32 mole percent monomer residues of at least one compound which is capable of reacting with either the first monomer or the second monomer to form an ester; and
the barrier coating comprises a crystalline wax-like hydrolytically degradable polymer material having a melting temperature that matches the bottom hole temperature, such that the degradable polymer is solid when maintained under dry conditions at a temperature up to 90° C and, when maintained in contact with water in the well at the downhole fracking location at the formation temperature of from 44° C up to 82° C, commences gradual degradation by reason of hydrolysis to a highly viscous, flowable liquid, which is flowable under the influence of hydraulic pressure outwardly of the well structure, through the well structure openings and into cracks and fractures in the adjacent formation to transmit to the formation hydraulic pressure forces applied thereto, and to thereby induce cracking and fracturing in the formation and further flowing of the polymer into and through the cracks and fractures created in the formation; and
whereby continued hydrolysis of the polymer causes the polymer to substantially completely degrade to water-soluble components after at least 3 days.

## Patentansprüche

1. Zusammensetzung mit einer Mehrzahl von Partikeln, die vorgesehen ist, um unter dem Einfluss von hydraulischem Druck von einer Bohrloch-Fracking-Position innerhalb einer unterirdischen Bohrlochstruktur durch Öffnungen in der Bohrlochstruktur in Brüche und Risse in einer angrenzenden unterirdischen Formation geströmt zu werden, um einen Fracking-Prozess zur Verbesserung der Permeabilität der Formation durch die Entwicklung von Brüchen oder Rissen darin zu unterstützen, wobei:
jedes der Partikel mindestens ein abbaubares Polymer und eine Barrierebeschichtung umfasst, die über dem abbaubaren Polymer aufgebracht ist; und
das abbaubare Polymer umfasst:
20 bis 80 Molprozent Monomerreste eines ersten Monomers, ausgewählt aus der Gruppe bestehend aus L-Milchsäure, D-Milchsäure, L-Lactid, D-Lactid und Glykolsäure;
20 bis 80 Molprozent Monomerreste eines zweiten Monomers, das sich von dem ersten Monomer unterscheidet, ausgewählt aus der Gruppe bestehend aus L-Milchsäure, D-Milchsäure, L-Lactid, D-Lactid und Glykolsäure; und
von etwa 0,001 bis etwa 32 Molprozent Monomerreste mindestens einer Verbindung, die in der Lage ist, entweder mit dem ersten Monomer oder dem zweiten Monomer unter Bildung eines Esters zu reagieren, so dass das abbaubare Polymer fest ist, wenn es unter trockenen Bedingungen bei einer Temperatur von bis zu 90° C gehalten wird, und, wenn es in Kontakt mit Wasser im Bohrloch an der Bohrlochfraktionierungsstelle bei einer Formationstemperatur von 44° C bis 82° C gehalten wird, aufgrund der Hydrolyse allmählich zu einer hochviskosen fließfähigen Flüssigkeit abgebaut wird, die unter dem Einfluss von hydraulischem Druck aus der Bohrlochstruktur heraus, durch die Öffnungen der Bohrlochstruktur und in Risse und Brüche in der angrenzenden Formation fließen kann, um die darauf ausgeübten hydraulischen Druckkräfte auf die Formation zu übertragen und dadurch Risse und Brüche in der Formation und ein weiteres Fließen des Polymers in und durch die in der Formation erzeugten Risse und Brüche zu induzieren; und
die Barrierebeschichtung ein kristallines wachsartiges hydrolytisch abbaubares Polymermaterial mit einer Schmelztemperatur umfasst, die der Temperatur der Bohrlochsohle entspricht,
wobei die fortgesetzte Hydrolyse des Polymers bewirkt, dass das Polymer nach mindestens 3 Tagen vollständig zu wasserlöslichen Komponenten abgebaut ist.

2. Zusammensetzung nach Anspruch 1, bei der die mindestens eine Verbindung, die in der Lage ist, entweder mit dem ersten Monomer oder dem zweiten Monomer unter Bildung eines Esters zu reagieren, ausgewählt ist aus der Gruppe bestehend aus (i) einem monofunktionellen oder multifunktionellen Alkohol; (ii) einer monofunktionellen oder multifunktionellen Carbonsäure; (iii) einem Anhydrid, das bei Reaktion des Anhydrids eine monofunktionelle oder multifunktionelle Carbonsäure ergibt; und (iv) einem monofunktionellen oder multifunktionellen Epoxid.

3. Zusammensetzung nach Anspruch 1, bei der das erste Monomer L-Milchsäure ist, das zweite Monomer Glykolsäure ist und bei der das abbaubare Polymer 70 bis 80 Molprozent Monomerreste des ersten Monomers und 20 bis 30 Molprozent Monomerreste des zweiten Monomers umfasst.

4. Zusammensetzung nach Anspruch 1, bei der das erste Monomer L-Milchsäure ist, das zweite Monomer D-Milchsäure ist und bei der das abbaubare Polymer 70 bis 80 Molprozent Monomerreste des ersten Monomers und 20 bis 30 Molprozent Monomerreste des zweiten Monomers umfasst.

5. Zusammensetzung nach Anspruch 1, bei der das erste Monomer L-Lactid ist, das zweite Monomer D-Lactid ist und bei der das abbaubare Polymer 50 bis 99,5 Molprozent Monomerreste des ersten Monomers und 0,5 bis 50 Molprozent Monomerreste des zweiten Monomers umfasst.

6. Zusammensetzung nach Anspruch 1, bei der die Zusammensetzung ferner bis zu 5 Gew.-% Polymilchsäure mit einem zahlenmittleren Molekulargewicht von mehr als 25.000 umfasst.

7. Zusammensetzung nach Anspruch 2, bei der die mindestens eine Verbindung, die in der Lage ist, entweder mit dem ersten Monomer oder dem zweiten Monomer unter Bildung eines Esters zu reagieren, ausgewählt ist aus der Gruppe bestehend aus (i) einem monofunktionellen oder multifunktionellen Alkohol mit 1 bis 16 Hydroxylgruppen; (ii) einer monofunktionellen oder multifunktionellen Carbonsäure mit 1 bis 16 Carbonsäuregruppen; (iii) und einem Anhydrid, das bei der Reaktion des Anhydrids eine monofunktionelle oder multifunktionelle Carbonsäure mit 2 bis 16 Carbonsäuregruppen ergibt.

8. Zusammensetzung nach Anspruch 1, bei der die mindestens eine Verbindung, die in der Lage ist, entweder mit dem ersten Monomer oder dem zweiten Monomer unter Bildung eines Esters zu reagieren, einen multifunktionellen Alkohol umfasst, der aus der Gruppe ausgewählt ist, die aus Pentaerythrit, Glycerin, 1,3-Propandiol, 1,4-Butandiol, 1,6-Hexandiol, Trimethyolpropan, dendritischen Polyolen mit bis zu 16 Hydroxylgruppen, Dipentaerythrit und Gemischen davon besteht.

9. Zusammensetzung nach Anspruch 1, bei der die mindestens eine Verbindung, die in der Lage ist, entweder mit dem ersten Monomer oder dem zweiten Monomer unter Bildung eines Esters zu reagieren, ein Polymer umfasst.

10. Zusammensetzung nach Anspruch 1, bei der die mindestens eine Verbindung, die in der Lage ist, entweder mit dem ersten Monomer oder dem zweiten Monomer unter Bildung eines Esters zu reagieren, einen Polyvinylalkohol umfasst.

11. Zusammensetzung nach Anspruch 1, bei der die mindestens eine Verbindung, die in der Lage ist, entweder mit dem ersten Monomer oder dem zweiten Monomer unter Bildung eines Esters zu reagieren, eine Polyacrylsäure umfasst.

12. Zusammensetzung nach Anspruch 1, bei der die mindestens eine Verbindung, die in der Lage ist, entweder mit dem ersten Monomer oder dem zweiten Monomer unter Bildung eines Esters zu reagieren, Pentaerythrit umfasst.

13. Zusammensetzung nach Anspruch 1, bei der die mindestens eine Verbindung, die in der Lage ist, entweder mit dem ersten Monomer oder dem zweiten Monomer unter Bildung eines Esters zu reagieren, eine multifunktionelle Carbonsäure umfasst, die aus der Gruppe ausgewählt ist, die aus Adipinsäure, Bernsteinsäure, Sebacinsäure und Gemischen davon besteht.

14. Zusammensetzung nach Anspruch 1, bei der die mindestens eine Verbindung, die in der Lage ist, entweder mit dem ersten Monomer oder dem zweiten Monomer zu reagieren, um einen Ester zu bilden, ein cyclisches Anhydrid umfasst, das eine multifunktionelle Carbonsäure ergibt, die aus der Gruppe ausgewählt ist, die aus Trimellitsäureanhydrid, Pyromellitsäureanhydrid und Gemischen davon besteht.

15. Verfahren zum Aufbrechen einer unterirdischen Formation in einem an ein Bohrloch angrenzenden Bereich derselben, umfassend das Fließen einer Mehrzahl von Partikeln unter dem Einfluss von hydraulischem Druck von einer Bohrloch-Aufbrechposition innerhalb einer unterirdischen Bohrlochstruktur durch Öffnungen in der Bohrlochstruktur in Brüche und Risse in einer angrenzenden unterirdischen Formation, um einen Fracking-Prozess zur Verbesserung der Permeabilität der Formation durch Entwicklung von Brüchen oder Rissen darin zu unterstützen,wobei:
jedes der Mehrzahl von Partikeln mindestens ein abbaubares Polymer und eine Barrierebeschichtung umfasst, die über dem abbaubaren Polymer aufgebracht ist;
das abbaubare Polymer umfasst:
20 bis 80 Molprozent Monomerreste eines ersten Monomers, ausgewählt aus der Gruppe bestehend aus L-Milchsäure, D-Milchsäure, L-Lactid, D-Lactid und Glykolsäure;
20 bis 80 Molprozent Monomerreste eines zweiten Monomers, das sich von dem ersten Monomer unterscheidet, ausgewählt aus der Gruppe bestehend aus L-Milchsäure, D-Milchsäure, L-Lactid, D-Lactid und Glykolsäure; und
etwa 0,001 bis etwa 32 Molprozent Monomerreste mindestens einer Verbindung, die in der Lage ist, entweder mit dem ersten Monomer oder dem zweiten Monomer unter Bildung eines Esters zu reagieren; und
die Barrierebeschichtung ein kristallines wachsartiges hydrolytisch abbaubares Polymermaterial mit einer Schmelztemperatur umfasst, die der Temperatur der Bohrlochsohle entspricht, so dass das abbaubare Polymer fest ist, wenn es unter trockenen Bedingungen bei einer Temperatur von bis zu 90° C gehalten wird, und, wenn es in Kontakt mit Wasser im Bohrloch an der Bohrlochfraktionierungsstelle bei der Formationstemperatur von 44° C bis zu 82° C gehalten wird, allmählich durch Hydrolyse zu einer hochviskosen, fließfähigen Flüssigkeit abgebaut wird, die unter dem Einfluss von hydraulischem Druck aus der Bohrlochstruktur heraus, durch die Öffnungen der Bohrlochstruktur und in Risse und Brüche in der angrenzenden Formation fließen kann, um die darauf ausgeübten hydraulischen Druckkräfte auf die Formation zu übertragen und dadurch Risse und Brüche in der Formation und ein weiteres Fließen des Polymers in und durch die in der Formation erzeugten Risse und Brüche zu induzieren; und
wobei die fortgesetzte Hydrolyse des Polymers bewirkt, dass das Polymer nach mindestens 3 Tagen im Wesentlichen vollständig zu wasserlöslichen Komponenten abgebaut ist.

## Revendications

1. Composition comprenant une pluralité de matières particulaires devant s'écouler, sous l'influence d'une pression hydraulique, depuis une position de fracturation hydraulique en trou descendant à l'intérieur d'une structure de puits souterrain par l'intermédiaire d'ouvertures dans la structure de puits dans des fractures et fissures dans une formation souterraine adjacente pour faciliter un traitement de fracturation hydraulique afin d'amplifier la perméabilité de la formation par le développement de fractures ou fissures dans celle-ci, dans laquelle
chacune des matières particulaires comprend au moins un polymère dégradable et un revêtement de barrière appliqué sur le polymère dégradable ;
le polymère dégradable comprend :
20 à 80 % en moles de résidus monomères d'un premier monomère choisi dans le groupe constitué par l'acide L-lactique, l'acide D-lactique, le L-lactide, le D-lactide, et l'acide glycolique ;
20 à 80 % en moles de résidus monomères d'un deuxième monomère, qui est différent du premier monomère, choisi dans le groupe constitué par l'acide L-lactique, l'acide D-lactique, le L-lactide, le D-lactide, et l'acide glycolique ; et
environ 0,001 à environ 32 % en moles de résidus monomères d'au moins un composé qui est capable de réagir avec soit le premier monomère soit le deuxième monomère pour former un ester, de façon que le polymère dégradable soit solide quand il est maintenu dans des conditions sèches à une température allant jusqu'à 90°C et, quand il est maintenu en contact avec de l'eau dans le puits à l'emplacement de la fracturation hydraulique en trou descendant à une température de formation de 44°C à 82°C, qu'il commence à se dégrader progressivement du fait d'une hydrolyse en un liquide fluide très visqueux, qui peut s'écouler sous l'influence d'une pression hydraulique vers l'extérieur de la structure de puits, par l'intermédiaire des ouvertures de la structure de puits et dans des fissures et fractures dans la formation adjacente pour transmettre les forces de pression hydraulique de formation qui lui ont été appliquées, et pour induire ainsi une fissuration et une fracturation dans la formation et en outre l'écoulement du polymère dans et à travers les fissures et fractures créées dans la formation ; et
le revêtement de barrière comprend un matériau polymère de type cire cristalline dégradable par voie hydrolytique ayant un point de fusion correspondant à la température du fond du puits,
moyennant quoi une hydrolyse continue du polymère provoque la dégradation complète du polymère en composants solubles dans l'eau après au moins 3 jours.

2. Composition selon la revendication 1, dans laquelle l'au moins un composé qui est capable de réagir avec soit le premier monomère soit le deuxième monomère pour former un ester est choisi dans le groupe constitué par (i) un alcool monofonctionnel ou multifonctionnel ; (ii) un acide carboxylique monofonctionnel ou multifonctionnel ; (iii) un anhydride qui engendre un acide carboxylique monofonctionnel ou multifonctionnel suite à une réaction de l'anhydride ; et (iv) un époxyde monofonctionnel ou multifonctionnel.

3. Composition selon la revendication 1, dans laquelle le premier monomère est l'acide L-lactique, le deuxième monomère est l'acide glycolique, et dans laquelle le polymère dégradable comprend 70 à 80 % en moles de résidus monomères du premier monomère et 20 à 30 % en moles de résidus monomères du deuxième monomère.

4. Composition selon la revendication 1, dans laquelle le premier monomère est l'acide L-lactique, le deuxième monomère est l'acide D-lactique, et dans laquelle le polymère dégradable comprend 70 à 80 % en moles de résidus monomères du premier monomère et 20 à 30 % en moles de résidus monomères du deuxième monomère.

5. Composition selon la revendication 1, dans laquelle le premier monomère est le L-lactide, le deuxième monomère est le D-lactide, et dans laquelle le polymère dégradable comprend 50 à 99,5 en moles de résidus monomères du premier monomère et 0,5 à 50 % en moles de résidus monomères du deuxième monomère.

6. Composition selon la revendication 1, laquelle composition comprend en outre jusqu'à 5 % en poids de poly(acide lactique) ayant une masse moléculaire moyenne en nombre supérieure à 25 000.

7. Composition selon la revendication 2, dans laquelle l'au moins un composé qui est capable de réagir avec soit le premier monomère soit le deuxième monomère pour former un ester est choisi dans le groupe constitué par (i) un alcool monofonctionnel ou multifonctionnel ayant 1 à 16 groupes hydroxyle ; (ii) un acide carboxylique monofonctionnel ou multifonctionnel ayant 1 à 16 groupes acide carboxylique ; et (iii) un anhydride qui engendre un acide carboxylique monofonctionnel ou multifonctionnel ayant 2 à 16 groupes acide carboxylique suite à une réaction de l'anhydride.

8. Composition selon la revendication 1, dans laquelle l'au moins un composé qui est capable de réagir avec soit le premier monomère soit le deuxième monomère pour former un ester comprend un alcool multifonctionnel choisi dans le groupe constitué par le pentaérythritol, le glycérol, le 1,3-propanediol, le 1,4-butanediol, le 1,6-hexanediol, le triméthylolpropane, les polyols dendritiques ayant jusqu'à 16 groupes hydroxyle, le dipentaérythritol, et leurs mélanges.

9. Composition selon la revendication 1, dans laquelle l'au moins un composé qui est capable de réagir avec soit le premier monomère soit le deuxième monomère pour former un ester comprend un polymère.

10. Composition selon la revendication 1, dans laquelle l'au moins un composé qui est capable de réagir avec soit le premier monomère soit le deuxième monomère pour former un ester comprend un poly(alcool vinylique).

11. Composition selon la revendication 1, dans laquelle l'au moins un composé qui est capable de réagir avec soit le premier monomère soit le deuxième monomère pour former un ester comprend un poly(acide acrylique).

12. Composition selon la revendication 1, dans laquelle l'au moins un composé qui est capable de réagir avec soit le premier monomère soit le deuxième monomère pour former un ester comprend du pentaérythritol.

13. Composition selon la revendication 1, dans laquelle l'au moins un composé qui est capable de réagir avec soit le premier monomère soit le deuxième monomère pour former un ester comprend un acide carboxylique multifonctionnel choisi dans le groupe constitué par l'acide adipique, l'acide succinique, l'acide sébacique, et leurs mélanges.

14. Composition selon la revendication 1, dans laquelle l'au moins un composé qui est capable de réagir avec soit le premier monomère soit le deuxième monomère pour former un ester comprend un anhydride cyclique qui engendre un acide carboxylique multifonctionnel choisi dans le groupe constitué par l'anhydride trimellitique, l'anhydride pyromellitique, et leurs mélanges.

15. Procédé de fracturation hydraulique d'une formation souterraine dans une région de celle-ci adjacente à un forage de puits, comprenant l'écoulement d'une pluralité de matières particulaires, sous l'influence d'une pression hydraulique, depuis une position de fracturation hydraulique en trou descendant à l'intérieur d'une structure de puits souterrain par l'intermédiaire d'ouvertures dans la structure de puits dans des fractures et fissures dans une formation souterraine adjacente pour faciliter un traitement de fracturation hydraulique afin d'amplifier la perméabilité de la formation par le développement de fractures ou fissures dans celle-ci, dans lequel :
chacune parmi la pluralité de matières particulaires comprend au moins un polymère dégradable et un revêtement de barrière appliqué sur le polymère dégradable ;
le polymère dégradable comprend :
20 à 80 % en moles de résidus monomères d'un premier monomère choisi dans le groupe constitué par l'acide L-lactique, l'acide D-lactique, le L-lactide, le D-lactide, et l'acide glycolique ;
20 à 80 % en moles de résidus monomères d'un deuxième monomère, qui est différent du premier monomère, choisi dans le groupe constitué par l'acide L-lactique, l'acide D-lactique, le L-lactide, le D-lactide, et l'acide glycolique ; et
environ 0,001 à environ 32 % en moles de résidus monomères d'au moins un composé qui est capable de réagir avec soit le premier monomère soit le deuxième monomère pour former un ester ; et
le revêtement de barrière comprend un matériau polymère de type cire cristalline dégradable par voie hydrolytique ayant un point de fusion correspondant à la température du fond du puits,
de façon que le polymère dégradable soit solide quand il est maintenu dans des conditions sèches à une température allant jusqu'à 90°C et, quand il est maintenu en contact avec de l'eau dans le puits à l'emplacement de la fracturation hydraulique en trou descendant à une température de formation de 44°C à 82°C, qu'il commence à se dégrader progressivement du fait d'une hydrolyse en un liquide fluide très visqueux, qui peut s'écouler sous l'influence d'une pression hydraulique vers l'extérieur de la structure de puits, par l'intermédiaire des ouvertures de la structure de puits et dans des fissures et fractures dans la formation adjacente pour transmettre les forces de pression hydraulique de formation qui lui ont été appliquées, et pour induire ainsi une fissuration et une fracturation dans la formation et en outre l'écoulement du polymère dans et à travers les fissures et fractures créées dans la formation ; et
moyennant quoi une hydrolyse continue du polymère provoque la dégradation complète du polymère en composants solubles dans l'eau après au moins 3 jours.
